# EUROPEAN PATENT APPLICATION

(11) **EP 4 661 582 A1**
(43) Date of publication of application: **10.12.2025**
(21) Application number: 24763083.3
(22) Date of filing: 26.02.2024
(51) Int. Cl.: H04W 74/08, H04W 74/04

(54) **COMMUNICATION METHOD AND COMMUNICATION APPARATUS**

(30) Priority: 02.03.2023 CN 202310237050
(71) Applicant: Huawei Technologies Co., Ltd., Shenzhen, Guangdong 518129 (CN)
(72) Inventor: LI, Yunbo, Shenzhen, Guangdong 518129 (CN); GAN, Ming, Shenzhen, Guangdong 518129 (CN); YU, Jian, Shenzhen, Guangdong 518129 (CN)
(74) Representative: Gill Jennings & Every LLP
(86) International application number: PCT/CN2024/078536
(87) International publication number: WO 2024/179401

(57) **Abstract**

Embodiments of this application provide a communication method, which may be applied to a communication system that supports IEEE 802.11 series protocols (such as Wi-Fi 7 and Wi-Fi 8). The method is performed by a first access point belonging to a first BSS. The method includes: receiving first information from a second access point, where the first information indicates a first maximum time length in which a first station sends a PPDU, the second access point and the first station belong to a second BSS, and a coverage area of the second BSS has an overlapping part with a coverage area of the first BSS; generating second information, where the second information indicates a second maximum time length in which a second station sends a PPDU, the second maximum time length is less than or equal to the first maximum time length, and the second station belongs to the first BSS; and sending the second information. The technical solutions of this application can avoid inability to perform preemption because an AP or a STA in an OBSS occupies a channel for a long time.

## Description

This application claims priority to Chinese Patent Application No. 202310237050.0, filed with the China National Intellectual Property Administration on March 2, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

IEEE 802.11 is one of current mainstream wireless access standards and has been widely used in commercial applications in the past decade. A low latency is an important research objective of the wireless local area network (wireless local area network, WLAN) standard. In IEEE 802.11be, restricted target wake time (restricted target wake time, R-TWT) is introduced to improve support for a low-latency service. The R-TWT allocates a service period (service period) in advance based on a periodic service, and gives a high access priority to a low-latency service in the service period. Although the R-TWT can improve support for the low-latency service, the next-generation WLAN standard, namely, ultra high reliability (ultra high reliability, UHR), may impose a higher requirement on a low latency, for example, an ultra-low latency less than several milliseconds.

Preemption (preemption) is a potential technology for resolving ultra-low latency. A principle of the preemption is to interrupt transmission of a non-low-latency service that is currently transmitted, preferentially transmit the low-latency service, and resume the transmission of the non-low-latency service after the transmission of the low-latency service is completed. In an existing technical solution, how to perform preemption in a basic service set (basic service set, BSS) is mainly considered, but no consideration is given to how to avoid an overlapping basic service set (overlapping basic service set, OBSS) occupying a channel for a long time.

### SUMMARY

Embodiments of this application provide a communication method and a communication apparatus, to avoid inability to perform preemption because an access point (access point, AP) or a station (station, STA) in an OBSS occupies a channel for a long time. Even if the OBSS occupies the channel, the station and the access point in the BSS may have more opportunities to send a low-latency service.

According to a first aspect, a communication method is provided, and is performed by a first access point or a communication apparatus disposed in the first access point. The first access point belongs to a first basic service set BSS. The method includes: receiving first information from a second access point, where the first information indicates a first maximum time length in which a first station sends a physical layer protocol data unit (PHY protocol data unit, PPDU), the second access point and the first station belong to a second BSS, a coverage area of the second BSS has an overlapping part with a coverage area of the first BSS, and the first station supports preemption; generating second information, where the second information indicates a second maximum time length in which a second station sends a PPDU, the second maximum time length is less than or equal to the first maximum time length, the second station belongs to the first BSS, and the second station supports preemption; and sending the second information.

In the technical solution provided in this application, impact of an OBSS on a preemption service is considered. A maximum time length in which a station sends a PPDU is set, so that even if the OBSS occupies a channel, a station and an access point in a BSS may have more opportunities to send a low-latency service.

It should be understood that, preemption indicates that transmission of a low-latency service is preferentially performed, and transmission of a non-low-latency service is resumed after the transmission of the low-latency service is completed. The first station and the second station may be non-access point stations (non-access point station, non-AP STA) that support preemption.

It should be understood that, that the coverage area of the second BSS has the overlapping part with the coverage area of the first BSS indicates that the first BSS and the second BSS are OBSSs of each other, that is, the OBSS of the first BSS includes the second BSS, and the OBSS of the second BSS includes the first BSS.

It should be understood that the second information is set by the first access point based on the received first information, and the second maximum time length is less than or equal to the first maximum time length. Because the operation of setting the second information is mutual for APs that are OBSSs of each other, all BSSs that support preemption set the second information to a same value, namely, a minimum value that is of multiple pieces of second information and that each AP originally wants to set.

For example, the first information and the second information may be a preemption limit (Preemption Limit) field, and a specific name of the field should not be understood as a limitation on this application.

It should be understood that, for information exchange with a response frame, the preemption limit should include a total time limit for the information exchange. For example, for interaction of data/block acknowledgment (data/BA), a sum of a PPDU carrying data, a PPDU carrying BA, and a short interframe space (short interframe space, SIFS) between the two cannot exceed the preemption limit.

In a possible implementation, the first information may be carried by a field in a beacon (beacon) frame sent by the second access point, and the second information may be carried by a field in a beacon frame sent by the first access point.

With reference to the first aspect, in some implementations of the first aspect, the method further includes: determining that a basic network allocation vector (basic network allocation vector, basic NAV) of the first access point is set based on a frame sent by the second access point or the first station; and ignoring the basic network allocation vector.

It should be understood that, after the first station or the second access point in the second BSS obtains a transmission opportunity (transmission opportunity, TXOP), the second station or the first access point in the first BSS sets the basic network allocation vector (basic network allocation vector, basic NAV) based on the received frame sent by the first station or the second access point in the second BSS. According to a rule in a current standard, a station or an access point whose basic NAV value is not equal to zero is not allowed to actively contend for a channel or send data. If the second station or the first access point in the first BSS wants to send the low-latency service through preemption in this case, the basic NAV set by the first station or the second access point in the second BSS needs to be ignored. That is, even if the value of the basic NAV of the second station or the first access point in the first BSS is greater than 0, the value is considered as 0, and preemption is initiated.

For example, the first access point sends, at a first moment, a PPDU for performing a preemption operation, the basic network allocation vector of the first access point is set based on the received frame sent by the first station or the second access point in the second BSS, and the basic network allocation vector of the first access point is greater than 0 at the first moment.

In the technical solution provided in this application, the first access point is disposed to ignore the basic network allocation vector set by a frame sent by the second access point or the first station, to ensure that the first access point in the first BSS can initiate preemption when low-latency service data arrives.

With reference to the first aspect, in some implementations of the first aspect, the method further includes: receiving third information from the second access point, where the third information indicates a third maximum time length in which the first station is allowed to continuously use a channel after obtaining the channel through contention; generating fourth information, where the fourth information indicates a fourth maximum time length in which the second station is allowed to continuously use a channel after obtaining the channel through contention, and the fourth maximum time length is less than or equal to the third maximum time length; and sending the fourth information.

In a possible implementation, the first information and the third information are carried in a same frame, and the second information and the fourth information are carried in a same frame.

In a possible implementation, the third information may be carried by a field in a beacon (beacon) frame sent by the second access point, and the fourth information may be carried by a field in a beacon frame sent by the first access point.

For example, the third information and the fourth information may be a transmission opportunity limit (TXOP Limit) field, and a specific name of the field should not be understood as a limitation on this application.

It should be understood that the fourth information is set by the first access point based on the received third information, and the fourth maximum time length is less than or equal to the third maximum time length. Because the operation of setting the fourth information is mutual for APs that are OBSSs of each other, all BSSs that support preemption set the fourth information to a same value, namely, a minimum value that is of multiple pieces of fourth information and that each AP originally wants to set.

In the technical solution provided in this application, impact of an OBSS on a preemption service is considered. A maximum time length in which a station is allowed to continuously use a channel after obtaining the channel through contention is set, so that even if the OBSS occupies the channel, a station and an access point in a BSS may have more opportunities to send a low-latency service.

With reference to the first aspect, in some implementations of the first aspect, the method further includes: receiving fifth information from the second access point, where the fifth information indicates a group in which the second BSS is located; and determining, based on the fifth information, that the second BSS and the first BSS are in a same group.

In some possible implementations, the fifth information may be a preemption group (preemption group) field, and the name should not be construed as a limitation on this application.

Optionally, the fifth information may include one or more bits. For example, the fifth information is 1 bit, and the fifth information being set to 1 indicates that the second BSS joins a preemption group, and otherwise indicates that the second BSS does not join the preemption group. Alternatively, the fifth information being set to 0 indicates that the second BSS joins the preemption group, and otherwise indicates that the second BSS does not join the preemption group. For example, the fifth information includes a plurality of bits. The fifth information being set to 0 indicates that the second BSS does not join any preemption group, and the fifth information not being set to 0 indicates that the second BSS joins a specific preemption group. For example, the fifth information is "11", indicating that the second BSS joins a third preemption group.

According to the communication method provided in this embodiment of this application, the preemption group field is set, so that a BSS that supports preemption can flexibly choose to join or not join the preemption group, thereby controlling a range of an access point or a station to perform a preemption operation.

With reference to the first aspect, in some implementations of the first aspect, the fifth information is carried by a field in a beacon frame sent by the second access point or a physical layer signal SIG field of a first PPDU, and the first PPDU is a PPDU sent by the second access point.

For example, the PPDU includes three parts: a physical layer frame header, data (Data), and physical layer extension (PHY extension, PE), and the physical layer frame header includes a physical layer SIG field.

The fifth information may be carried by the field in the beacon frame sent by the second access point, for example, may be a preemption element (Preemption element) or a UHR operation element (UHR Operation element).

With reference to the first aspect, in some implementations of the first aspect, the method further includes: sending sixth information, where the sixth information indicates a BSS that is located in a same group as the first BSS.

In a possible implementation, the sixth information may be carried by a field in a beacon frame sent by the first access point.

In the communication method provided in this embodiment of this application, the first access point autonomously selects, by using the sixth information, an OBSS that is in a same preemption group as the first access point, so that an establishment manner of the preemption group is more flexible.

With reference to the first aspect, in some implementations of the first aspect, the sixth information indicates a color or a partial identity document (identity document, ID) of a BSS that is located in a same group as the first BSS.

In some possible implementations, the sixth information may be a preemption BSS color bitmap (Preemption BSS Color Bitmap) field. For example, a length of the preemption BSS color bitmap field may be 64 bits. Currently, the BSS color (BSS color) is 6 bits, and there may be a maximum of 64 different BSS colors. Therefore, each bit in the 64 bits of the preemption BSS color bitmap field may correspond to one BSS color.

It should be understood that the preemption BSS color bitmap is a bitmap, indicating a BSS color value used by a member of the preemption group to which the first access point belongs. Each bit of the bitmap corresponds to one of the 64 BSS colors, where the lowest-numbered bit corresponds to the BSS color value 0, and the highest-numbered bit corresponds to the BSS color value 63. For example, if a bit in the bitmap is 1, it indicates that at least one BSS that uses a BSS color value corresponding to the bit is in a same preemption group as the first access point. If a bit in the bitmap is 0, it indicates that no BSS in the preemption group in which the first access point is located uses a BSS color value corresponding to the bit. The BSS color value 0 corresponds to a reserved bit in the bitmap.

It should be understood that a length of the preemption BSS color bitmap field may be related to a quantity of OBSSs. When the quantity of OBSSs is relatively small, a length less than 64 bits may be used. The length of the preemption BSS color bitmap field is not specified. This example should not be understood as a limitation on this application.

In some possible implementations, a member field of the preemption group may be a preemption partial BSSID bitmap (Preemption Partial BSSID Bitmap) field. The BSS identity document (BSS identity document, BSSID) is 6 bytes, that is, 48 bits. If a bitmap (bitmap) indicates all possible BSSID values in a traversal manner, a large amount of space is wasted. Therefore, in this embodiment of this application, some bits in the BSSID indicate the BSS that is located in the same preemption group as the first access point. For example, the preemption partial BSSID bitmap may be selected as 64 bits that respectively correspond to one value in BSSID [39:44] or may respectively correspond to one value in BSSID [38:43]. It should be understood that A [a:b] is a range of A from an a^{th} bit to a b^{th} bit.

It should be understood that the preemption partial BSSID bitmap field is a bitmap, and indicates a part of a BSSID value of a member that is located in a same preemption group as the first access point. For example, each bit of the bitmap corresponds to one of 64 possible values of the BSSID [39:44], where the bit with the lowest number corresponds to a partial BSSID value 0, and the bit with the highest number corresponds to a partial BSSID value 63. For example, if a bit in the bitmap is 1, it indicates that at least one BSS that uses a partial BSSID value corresponding to the bit is in a same preemption group as the first access point. If a bit in the bitmap is 0, it indicates that no BSS in the preemption group in which the first access point is located uses a partial BSSID value corresponding to the bit.

It should be understood that the preemption partial BSSID bitmap being 64 bits is merely an example. This example should not be understood as a limitation on this application. In an actual application scenario, the preemption partial BSSID bitmap may be selected as a specific length as required, for example, 32 bits or 16 bits, to correspond to a specified range of BSSIDs.

In the communication method provided in this application, the first access point may indicate, by using any one of the preemption BSS color bitmap field or the preemption partial BSSID bitmap field, the BSS that is in the same preemption group as the first access point. Optionally, the first access point may alternatively indicate, by using both the preemption BSS color bitmap field and the preemption partial BSSID bitmap field, the BSS that is in the same preemption group as the first access point. This is not limited in this application.

In the communication method provided in this embodiment of this application, the first access point autonomously selects, by using the sixth information, an OBSS that is in a same preemption group as the first access point, so that an establishment manner of the preemption group is more flexible.

With reference to the first aspect, in some implementations of the first aspect, a length of the sixth information is 64 bits.

According to a second aspect, a communication method is provided, and is performed by a first access point or a communication apparatus disposed in the first access point. The first access point belongs to a first basic service set BSS. The method includes: receiving third information from the second access point, where the third information indicates a third maximum time length in which a first station is allowed to continuously use a channel after obtaining the channel through contention, the second access point and the first station belong to a second BSS, a coverage area of the second BSS has an overlapping part with a coverage area of the first BSS, and the first station supports preemption; generating fourth information, where the fourth information indicates a fourth maximum time length in which a second station is allowed to continuously use a channel after obtaining the channel through contention, the fourth maximum time length is less than or equal to the third maximum time length, the second station belongs to the first BSS, and the second station supports preemption; and sending the fourth information.

In the technical solution provided in this application, impact of an OBSS on a preemption service is considered. A maximum time length in which a station is allowed to continuously use a channel after obtaining the channel through contention is set, so that even if the OBSS occupies the channel, a station and an access point in a BSS may have more opportunities to send a low-latency service.

It should be understood that, preemption indicates that transmission of a low-latency service is preferentially performed, and transmission of a non-low-latency service is resumed after the transmission of the low-latency service is completed. The first station and the second station may be non-access point stations (non-access point station, non-AP STA) that support preemption.

It should be understood that, that the coverage area of the second BSS has the overlapping part with the coverage area of the first BSS indicates that the first BSS and the second BSS are OBSSs of each other, that is, the OBSS of the first BSS includes the second BSS, and the OBSS of the second BSS includes the first BSS.

In a possible implementation, the third information may be carried by a field in a beacon frame sent by the second access point, and the fourth information may be carried by a field in a beacon frame sent by the first access point.

For example, the third information and the fourth information may be a transmission opportunity limit (TXOP Limit) field, and a specific name of the field should not be understood as a limitation on this application.

It should be understood that the fourth information is set by the first access point based on the received third information, and the fourth maximum time length is less than or equal to the third maximum time length. Because the operation of setting the fourth information is mutual for APs that are OBSSs of each other, all BSSs that support preemption set the fourth information to a same value, namely, a minimum value that is of multiple pieces of fourth information and that each AP originally wants to set.

With reference to the second aspect, in some implementations of the second aspect, the method further includes: receiving first information from the second access point, where the first information indicates a first maximum time length in which the first station sends a physical layer protocol data unit PPDU; generating second information, where the second information indicates a second maximum time length in which the second station sends a PPDU, and the second maximum time length is less than or equal to the first maximum time length; and sending the second information.

It should be understood that the second information is set by the first access point based on the received first information, and the second maximum time length is less than or equal to the first maximum time length. Because the operation of setting the second information is mutual for APs that are OBSSs of each other, all BSSs that support preemption set the second information to a same value, namely, a minimum value that is of multiple pieces of second information and that each AP originally wants to set.

For example, the first information and the second information may be a preemption limit (Preemption Limit) field, and a specific name of the field should not be understood as a limitation on this application.

It should be understood that, for information exchange with a response frame, the preemption limit should include a total time limit for the information exchange. For example, for interaction of data/block acknowledgment (data/BA), a sum of a PPDU carrying data, a PPDU carrying BA, and a short interframe space (short interframe space, SIFS) between the two cannot exceed the preemption limit.

In a possible implementation, the first information may be carried by a field in a beacon frame sent by the second access point, and the second information may be carried by a field in a beacon frame sent by the first access point.

In a possible implementation, the first information and the third information are carried in a same frame, and the second information and the fourth information are carried in a same frame.

In the technical solution provided in this application, impact of an OBSS on a preemption service is considered. A maximum time length in which a station sends a PPDU is set, so that even if the OBSS occupies a channel, a station and an access point in a BSS may have more opportunities to send a low-latency service.

With reference to the second aspect, in some implementations of the second aspect, the method further includes: determining that a basic network allocation vector of the first access point is set based on a frame sent by the second access point or the first station; and ignoring the basic network allocation vector.

It should be understood that, after the first station or the second access point in the second BSS obtains a transmission opportunity (transmission opportunity, TXOP), the second station or the first access point in the first BSS sets the basic network allocation vector (basic network allocation vector, basic NAV) based on the received frame sent by the first station or the second access point in the second BSS. According to a rule in a current standard, a station or an access point whose basic NAV value is not equal to zero is not allowed to actively contend for a channel or send data. If the second station or the first access point in the first BSS wants to send the low-latency service through preemption in this case, the basic NAV set by the first station or the second access point in the second BSS needs to be ignored. That is, even if the value of the basic NAV of the second station or the first access point in the first BSS is greater than 0, the value is considered as 0, and preemption is initiated.

For example, the first access point sends, at a first moment, a PPDU for performing a preemption operation, the basic network allocation vector of the first access point is set based on the received frame sent by the first station or the second access point in the second BSS, and the basic network allocation vector of the first access point is greater than 0 at the first moment.

In the technical solution provided in this application, the first access point is disposed to ignore the basic network allocation vector set by the frame sent by the second access point or the first station, to ensure that the second station or the first access point in the first BSS can initiate preemption when low-latency service data arrives.

With reference to the second aspect, in some implementations of the second aspect, the method further includes: receiving fifth information from the second access point, where the fifth information indicates a group in which the second BSS is located; and determining, based on the fifth information, that the second BSS and the first BSS are in a same group.

In some possible implementations, the fifth information may be a preemption group (preemption group) field, and the name should not be construed as a limitation on this application.

Optionally, the fifth information may include one or more bits. For example, the fifth information is 1 bit, and the fifth information being set to 1 indicates that the second BSS joins a preemption group, and otherwise indicates that the second BSS does not join the preemption group. Alternatively, the fifth information being set to 0 indicates that the second BSS joins the preemption group, and otherwise indicates that the second BSS does not join the preemption group. For example, the fifth information includes a plurality of bits. The fifth information being set to 0 indicates that the second BSS does not join any preemption group, and the fifth information not being set to 0 indicates that the second BSS joins a specific preemption group. For example, the fifth information is "11", indicating that the second BSS joins a third preemption group.

According to the communication method provided in this embodiment of this application, the preemption group field is set, so that a BSS that supports preemption can flexibly choose to join or not join the preemption group, thereby controlling a range of an access point or a station to perform a preemption operation.

With reference to the second aspect, in some implementations of the second aspect, the fifth information is carried by a field in a beacon frame sent by the second access point or a physical layer signal SIG field of a first PPDU, and the first PPDU is a PPDU sent by the second access point.

For example, the PPDU includes three parts: a physical layer frame header, data (Data), and physical layer extension (PHY extension, PE), and the physical layer frame header includes a physical layer SIG field.

The fifth information may be carried by the field in the beacon frame sent by the second access point, for example, may be a preemption element (Preemption element) or a UHR operation element (UHR Operation element).

With reference to the second aspect, in some implementations of the second aspect, the method further includes: sending sixth information, where the sixth information indicates a BSS that is located in a same group as the first BSS.

In a possible implementation, the sixth information may be carried by a field in a beacon frame sent by the first access point.

In the communication method provided in this embodiment of this application, the first access point autonomously selects, by using the sixth information, an OBSS that is in a same preemption group as the first access point, so that an establishment manner of the preemption group is more flexible.

With reference to the second aspect, in some implementations of the second aspect, the sixth information indicates a color or a partial ID of a BSS that is located in a same group as the first BSS.

In some possible implementations, the sixth information may be a preemption BSS color bitmap (Preemption BSS Color Bitmap) field. For example, a length of the preemption BSS color bitmap field may be 64 bits. Currently, the BSS color (BSS color) is 6 bits, and there may be a maximum of 64 different BSS colors. Therefore, each bit in the 64 bits of the preemption BSS color bitmap field may correspond to one BSS color.

It should be understood that the preemption BSS color bitmap is a bitmap, indicating a BSS color value used by a member of the preemption group to which the first access point belongs. Each bit of the bitmap corresponds to one of the 64 BSS colors, where the lowest-numbered bit corresponds to the BSS color value 0, and the highest-numbered bit corresponds to the BSS color value 63. For example, if a bit in the bitmap is 1, it indicates that at least one BSS that uses a BSS color value corresponding to the bit is in a same preemption group as the first access point. If a bit in the bitmap is 0, it indicates that no BSS in the preemption group in which the first access point is located uses a BSS color value corresponding to the bit. The BSS color value 0 corresponds to a reserved bit in the bitmap.

It should be understood that a length of the preemption BSS color bitmap field may be related to a quantity of OBSSs. When the quantity of OBSSs is relatively small, a length less than 64 bits may be used. The length of the preemption BSS color bitmap field is not specified. This example should not be understood as a limitation on this application.

In some possible implementations, a member field of the preemption group may be a preemption partial BSSID bitmap (Preemption Partial BSSID Bitmap) field. The BSS identity document (BSS identity document, BSSID) is 6 bytes, that is, 48 bits. If a bitmap (bitmap) indicates all possible BSSID values in a traversal manner, a large amount of space is wasted. Therefore, in this embodiment of this application, some bits in the BSSID indicate the BSS that is located in the same preemption group as the first access point. For example, the preemption partial BSSID bitmap may be selected as 64 bits that respectively correspond to one value in BSSID [39:44] or may respectively correspond to one value in BSSID [38:43]. It should be understood that A [a:b] is a range of A from an a^{th} bit to a b^{th} bit.

It should be understood that the preemption partial BSSID bitmap field is a bitmap, and indicates a part of a BSSID value of a member that is located in a same preemption group as the first access point. For example, each bit of the bitmap corresponds to one of 64 possible values of the BSSID [39:44], where the bit with the lowest number corresponds to a partial BSSID value 0, and the bit with the highest number corresponds to a partial BSSID value 63. For example, if a bit in the bitmap is 1, it indicates that at least one BSS that uses a partial BSSID value corresponding to the bit is in a same preemption group as the first access point. If a bit in the bitmap is 0, it indicates that no BSS in the preemption group in which the first access point is located uses a partial BSSID value corresponding to the bit.

It should be understood that the preemption partial BSSID bitmap being 64 bits is merely an example. This example should not be understood as a limitation on this application. In an actual application scenario, the preemption partial BSSID bitmap may be selected as a specific length as required, for example, 32 bits or 16 bits, to correspond to a specified range of BSSIDs.

In the communication method provided in this application, the first access point may indicate, by using any one of the preemption BSS color bitmap field or the preemption partial BSSID bitmap field, the BSS that is in the same preemption group as the first access point. Optionally, the first access point may alternatively indicate, by using both the preemption BSS color bitmap field and the preemption partial BSSID bitmap field, the BSS that is in the same preemption group as the first access point. This is not limited in this application.

In the communication method provided in this embodiment of this application, the first access point autonomously selects, by using the sixth information, an OBSS that is in a same preemption group as the first access point, so that an establishment manner of the preemption group is more flexible.

With reference to the second aspect, in some implementations of the second aspect, a length of the sixth information is 64 bits.

According to a third aspect, a communication method is provided, and is performed by a second access point or a communication apparatus disposed in the second access point. The second access point belongs to a second BSS. The method includes: sending first information to a first access point, where the first access point belongs to a first BSS, the first information indicates a first maximum time length in which a first station sends a physical layer protocol data unit PPDU, the second access point and the first station belong to the second BSS, a coverage area of the second BSS has an overlapping part with a coverage area of the first BSS, and the first station supports preemption; and receiving second information from the first access point, where the second information indicates a second maximum time length in which a second station sends a PPDU, the second maximum time length is less than or equal to the first maximum time length, the second station belongs to the first BSS, and the second station supports preemption.

With reference to the third aspect, in some implementations of the third aspect, the method further includes: sending third information to the first access point, where the third information indicates a third maximum time length in which the first station is allowed to continuously use a channel after obtaining the channel through contention; and receiving fourth information from the first access point, where the fourth information indicates a fourth maximum time length in which the second station is allowed to continuously use a channel after obtaining through contention, and the fourth maximum time length is less than or equal to the third maximum time length.

With reference to the third aspect, in some implementations of the third aspect, the method further includes: sending fifth information, where the fifth information indicates a group in which the second BSS is located.

With reference to the third aspect, in some implementations of the third aspect, the fifth information is carried by a field in a beacon frame sent by the second access point or a physical layer SIG field of a first PPDU, and the first PPDU is a PPDU sent by the second access point.

With reference to the third aspect, in some implementations of the third aspect, the method further includes: receiving sixth information from the first access point, where the sixth information indicates a BSS that is located in a same group as the first BSS.

With reference to the third aspect, in some implementations of the third aspect, the sixth information indicates a color or a partial ID of a BSS that is located in a same group as the first BSS.

With reference to the third aspect, in some implementations of the third aspect, a length of the sixth information is 64 bits.

Beneficial effects of any one of the third aspect or the possible implementations of the third aspect correspond to beneficial effects of any one of the first aspect or the possible implementations of the first aspect. Details are not described again.

According to a fourth aspect, a communication method is provided, and is performed by a second station or a communication apparatus disposed in the second station. The second station belongs to a first BSS. The method includes: receiving fifth information from a second access point, where the fifth information indicates a group in which a second BSS is located, a coverage area of the second BSS has an overlapping part with a coverage area of the first BSS, and the second access point belongs to the second BSS; and determining, based on the fifth information, that the second BSS and the first BSS are located in a same group.

It should be understood that, that the coverage area of the second BSS has the overlapping part with the coverage area of the first BSS indicates that the first BSS and the second BSS are OBSSs of each other, that is, the OBSS of the first BSS includes the second BSS, and the OBSS of the second BSS includes the first BSS.

In some possible implementations, the fifth information may be a preemption group (preemption group) field, and the name should not be construed as a limitation on this application.

Optionally, the fifth information may include one or more bits. For example, the fifth information is 1 bit, and the fifth information being set to 1 indicates that the second BSS joins a preemption group, and otherwise indicates that the second BSS does not join the preemption group. Alternatively, the fifth information being set to 0 indicates that the second BSS joins the preemption group, and otherwise indicates that the second BSS does not join the preemption group. For example, the fifth information includes a plurality of bits. The fifth information being set to 0 indicates that the second BSS does not join any preemption group, and the fifth information not being set to 0 indicates that the second BSS joins a specific preemption group. For example, the fifth information is "11", indicating that the second BSS joins a third preemption group.

According to the communication method provided in this embodiment of this application, the preemption group field is set, so that a BSS that supports preemption can flexibly choose to join or not join the preemption group, thereby controlling a range of an access point or a station to perform a preemption operation.

With reference to the fourth aspect, in some implementations of the fourth aspect, the fifth information is carried by a field in a beacon frame sent by the second access point or a physical layer SIG field of a first PPDU, and the first PPDU is a PPDU sent by the second access point.

The fifth information may be carried by the field in the beacon frame sent by the second access point, for example, may be a preemption element (Preemption element) or a UHR operation element (UHR Operation element).

With reference to the fourth aspect, in some implementations of the fourth aspect, the method further includes: receiving seventh information, where the seventh information indicates whether the second access point supports preemption; and determining, based on the seventh information, that the second access point supports preemption.

It should be understood that, before performing preemption to send a low-latency service, the second station in the first BSS needs to first determine that the second access point supports preemption. For example, the seventh information may be carried in a beacon frame sent by the second access point, and the second station may parse the beacon frame sent by the second access point, to determine that the second access point supports the preemption mechanism. Optionally, the first access point in the first BSS may broadcast a list of all OBSSs that support preemption, and the second station learns, by using the broadcast list, that the second access point supports preemption.

With reference to the fourth aspect, in some implementations of the fourth aspect, the seventh information is carried by a field in a beacon frame sent by the first access point or the second access point, and the first access point belongs to the first BSS.

With reference to the fourth aspect, in some implementations of the fourth aspect, the method further includes: determining that a basic network allocation vector of the second station is set based on a frame sent by the second access point or the first station, where the first station belongs to the second BSS, and the first station supports preemption; and ignoring the basic network allocation vector.

It should be understood that, after the first station or the second access point in the second BSS obtains a transmission opportunity (transmission opportunity, TXOP), the second station or the first access point in the first BSS sets the basic network allocation vector (basic network allocation vector, basic NAV) based on the received frame sent by the first station or the second access point in the second BSS. According to a rule in a current standard, a station or an access point whose basic NAV value is not equal to zero is not allowed to actively contend for a channel or send data. If the second station or the first access point in the first BSS wants to send the low-latency service through preemption in this case, the basic NAV set by the first station or the second access point in the second BSS needs to be ignored. That is, even if the value of the basic NAV of the second station or the first access point in the first BSS is greater than 0, the value is considered as 0, and preemption is initiated.

For example, the second station sends, at a second moment, a PPDU for performing a preemption operation, the basic network allocation vector of the second station is set based on the received frame sent by the first station or the second access point in the second BSS, and the basic network allocation vector of the second station is greater than 0 at the second moment.

In the technical solution provided in this application, the second station is disposed to ignore the basic network allocation vector set by the frame sent by the second access point or the first station, to ensure that the second station in the first BSS can initiate preemption when low-latency service data arrives.

According to a fifth aspect, a communication apparatus is provided, and includes modules or units configured to perform the method in any one of the first aspect or the possible implementations of the first aspect.

According to a sixth aspect, a communication apparatus is provided, and includes a processor. The processor is coupled to a memory, and may be configured to execute instructions in the memory, to implement the method according to any one of the first aspect or the possible implementations of the first aspect. Optionally, the communication apparatus further includes the memory. Optionally, the communication apparatus further includes a communication interface. The processor is coupled to the communication interface, and controls the communication interface to implement communication with another network element.

In an implementation, the communication apparatus is an access point. When the communication apparatus is the access point, the communication interface may be a transceiver or an input/output interface.

In another implementation, the communication apparatus is a chip configured in the access point. When the communication apparatus is the chip configured in the access point, the communication interface may be an input/output interface.

Optionally, the transceiver may be a transceiver circuit. Optionally, the input/output interface may be an input/output circuit.

According to a seventh aspect, a communication apparatus is provided, and includes modules or units configured to perform the method according to any one of the second aspect or the possible implementations of the second aspect.

According to an eighth aspect, a communication apparatus is provided, and includes a processor. The processor is coupled to a memory, and may be configured to execute instructions in the memory, to implement the method according to any one of the second aspect or the possible implementations of the second aspect. Optionally, the communication apparatus further includes the memory. Optionally, the communication apparatus further includes a communication interface. The processor is coupled to the communication interface, and controls the communication interface to implement communication with another network element.

In an implementation, the communication apparatus is an access point. When the communication apparatus is the access point, the communication interface may be a transceiver or an input/output interface.

In another implementation, the communication apparatus is a chip configured in the access point. When the communication apparatus is the chip configured in the access point, the communication interface may be an input/output interface.

Optionally, the transceiver may be a transceiver circuit. Optionally, the input/output interface may be an input/output circuit.

According to a ninth aspect, a communication apparatus is provided, and includes modules or units configured to perform the method according to any one of the third aspect or the possible implementations of the third aspect.

According to a tenth aspect, a communication apparatus is provided, and includes a processor. The processor is coupled to a memory, and may be configured to execute instructions in the memory, to implement the method according to any one of the third aspect or the possible implementations of the third aspect. Optionally, the communication apparatus further includes the memory. Optionally, the communication apparatus further includes a communication interface. The processor is coupled to the communication interface, and controls the communication interface to implement communication with another network element.

In an implementation, the communication apparatus is an access point. When the communication apparatus is the access point, the communication interface may be a transceiver or an input/output interface.

In another implementation, the communication apparatus is a chip configured in the access point. When the communication apparatus is the chip configured in the access point, the communication interface may be an input/output interface.

Optionally, the transceiver may be a transceiver circuit. Optionally, the input/output interface may be an input/output circuit.

According to an eleventh aspect, a communication apparatus is provided, and includes modules or units configured to perform the method according to any one of the fourth aspect or the possible implementations of the fourth aspect.

According to a twelfth aspect, a communication apparatus is provided, and includes a processor. The processor is coupled to a memory, and may be configured to execute instructions in the memory, to implement the method according to any one of the fourth aspect or the possible implementations of the fourth aspect. Optionally, the communication apparatus further includes the memory. Optionally, the communication apparatus further includes a communication interface. The processor is coupled to the communication interface, and controls the communication interface to implement communication with another network element.

In an implementation, the communication apparatus is a station. When the communication apparatus is the station, the communication interface may be a transceiver or an input/output interface.

In another implementation, the communication apparatus is a chip configured in the station. When the communication apparatus is the chip configured in the station, the communication interface may be an input/output interface.

Optionally, the transceiver may be a transceiver circuit. Optionally, the input/output interface may be an input/output circuit.

According to a thirteenth aspect, a computer program product is provided. The computer program product includes a computer program (also referred to as code or an instruction). When the computer program is run, a computer is enabled to perform the method according to any one of the first aspect to the fourth aspect and the possible implementations of the first aspect to the fourth aspect.

According to a fourteenth aspect, a computer-readable medium is provided. The computer-readable medium stores a computer program (also referred to as code or an instruction). When the computer program is run on a computer, the computer is enabled to perform the method according to any one of the first aspect to the fourth aspect and the possible implementations of the first aspect to the fourth aspect.

According to a fifteenth aspect, a communication system is provided. The communication system includes the first access point, the second access point, and/or the second station. The first access point is configured to perform the method according to any one of the first aspect and the second aspect or the possible implementations of the first aspect and the second aspect. The second access point is configured to perform the method according to any one of the third aspect or the possible implementations of the third aspect. The second station is configured to perform the method according to any one of the fourth aspect or the possible implementations of the fourth aspect.

### BRIEF DESCRIPTION OF DRAWINGS

FIG. 1 is a diagram of a basic architecture of IEEE 802.11 according to this application;
FIG. 2 is a diagram of an application scenario according to an embodiment of this application;
FIG. 3 is a diagram of a communication apparatus according to an embodiment of this application;
FIG. 4 is a diagram of a structure of an EDCA parameter set element according to an embodiment of this application;
FIG. 5 is a diagram of a structure of a preemption EDCA parameter set element according to an embodiment of this application;
FIG. 6 is a schematic flowchart of a communication method according to an embodiment of this application;
FIG. 7 is a diagram of another application scenario according to an embodiment of this application;
FIG. 8 is a block diagram of a communication apparatus according to an embodiment of this application; and
FIG. 9 is a block diagram of a communication device according to an embodiment of this application.

### DESCRIPTION OF EMBODIMENTS

The following describes technical solutions of embodiments in this application with reference to accompanying drawings. Clearly, the described embodiments are some but not all of embodiments of this application. All other embodiments obtained by a person of ordinary skill in the art based on embodiments of this application without creative efforts shall fall within the protection scope of this application.

In embodiments of this application, the term "example", "for example", or the like is used to give an example, an illustration, or a description. Any embodiment or design scheme described as an "example" in this application should not be explained as being more preferred or having more advantages than another embodiment or design scheme. Exactly, the term "example" is for presenting a concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

It should be noted that the "field" in this application may be a part of information in general, and the "field" may also be referred to as a "field", a "field", or the like. In addition, a name of the field in this application is merely an example, and may be another name in specific implementation. This is not specifically limited in this application.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

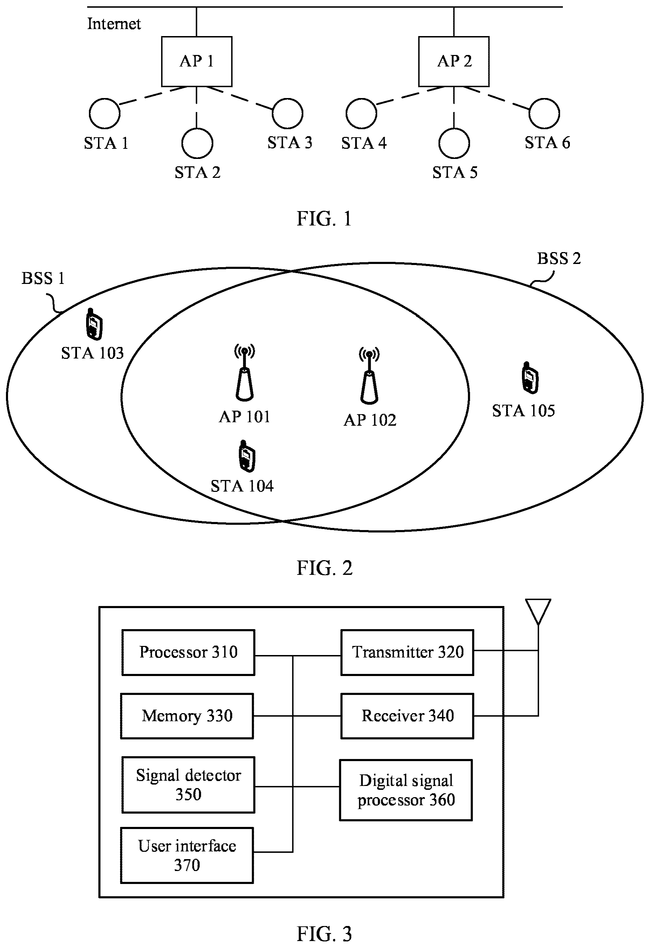

IEEE 802.11 is one of current mainstream wireless access standards and has been widely used in commercial applications in the past decade. FIG. 1 is a diagram of a basic architecture of IEEE 802.11 according to this application. An access point (access point, AP) 1 and an AP 2 access the Internet in a wired or wireless manner, and each AP is associated with a plurality of stations (stations, STAs). As shown in FIG. 1, the AP 1 is associated with a STA 1 to a STA 3, the AP 2 is associated with a STA 4 to a STA 6, and uplink and downlink wireless communication is performed between the AP and the associated STA according to the IEEE 802.11 protocol.

A low latency is an important research objective of the wireless local area network (wireless local area network, WLAN) standard. In IEEE 802.11be, restricted target wake time (restricted target wake time, R-TWT) is introduced to improve support for a low-latency service. The R-TWT allocates a service period (service period) in advance based on a periodic service, and gives a high access priority to a low-latency service in the service period. Although the R-TWT can improve support for the low-latency service, the next-generation WLAN standard, namely, ultra high reliability (ultra high reliability, UHR), may impose a higher requirement on a low latency, for example, an ultra-low latency less than several milliseconds. In some actual application scenarios such as augmented reality (augmented reality, AR), virtual reality (virtual reality, VR), industrial Internet of Things (internet of things, IoT), and telemedicine, such ultra-low latency requirements exist, but current WLAN standards cannot meet the requirements currently. Therefore, a new low-latency mechanism is urgently required to solve the problem.

Preemption (preemption) is a potential technology for resolving ultra-low latency. A principle of the preemption is to interrupt transmission of a non-low-latency service that is currently transmitted, preferentially transmit the low-latency service, and resume the transmission of the non-low-latency service after the transmission of the low-latency service is completed. It should be understood that the low-latency service and the non-low-latency service are relative. The non-low-latency service may also have a latency requirement, but the latency requirement of the non-low-latency service is higher than that of the low-latency service. In an existing technical solution, how to perform preemption in a basic service set (basic service set, BSS) is mainly considered, but no consideration is given to how to avoid an overlapping basic service set (overlapping basic service set, OBSS) occupying a channel for a long time.

For ease of understanding of the technical solutions of this application, the following briefly describes related concepts or related technologies in this application.
1. Enhanced distributed channel access (enhanced distributed channel access, EDCA): A channel contention mechanism defined by Wi-Fi multimedia (Wi-Fi multimedia, WMM). This mechanism enables high-priority packets to be sent first and occupy more bandwidth.
2. Access category (access category, AC): WMM defines four access categories that have their respective priority queues. These queues are classified into AC-VO (voice queue), AC-VI (video queue), AC-BE (best effort queue), and AC-BK (background queue) in descending order of priority. A packet in a queue with a higher priority has a higher capability of preempting a channel.
3. Channel access: A wireless local area network (wireless local area network, WLAN) system works on an unlicensed frequency band. A wireless channel of the wireless local area network is shared. Before transmission, channel access needs to be performed first. Before a station needs to transmit a radio frame, the station needs to first listen to whether another station is performing transmission. If a result of listening to a channel is busy, transmission is temporarily suspended until the channel becomes idle. After the channel becomes idle, random backoff needs to be further performed before data transmission, to cope with a collision between a plurality of potential transmitting stations through random backoff. After the random backoff process in an idle state of the channel ends, the station may send a radio frame. Before the data transmission, a short control frame, for example, a request-to-send (request to send, RTS) frame or a clear-to-send (clear to send, CTS) frame, may also be exchanged with the current station, to further reduce a throughput loss caused by the collision. After the exchange collision of the short frame occurs, the transmit station can know as soon as possible that the collision has occurred, and therefore access a channel again after performing random backoff again. This avoids that a transmission failure of an entire data frame is caused by direct transmission of a long data frame when the collision occurs.
4. Network allocation vector (network allocation vector, NAV) setting: In a WLAN system, sensing needs to be performed before channel access is performed. The sensing includes physical carrier sensing and virtual carrier sensing. Physical carrier sensing is implemented by sensing energy on a channel and a signal of a WLAN radio frame. When received energy or strength of a received WLAN radio frame is less than a threshold, the physical carrier sensing is idle; otherwise, the physical carrier sensing is busy. Virtual carrier sensing is implemented by setting a NAV. A NAV is maintained. When a value of the NAV is not 0, the virtual carrier sensing is busy, and when the NAV value is 0, the virtual carrier sensing is idle. Generally, the station is allowed to access a channel only when both the physical carrier sensing and the virtual carrier sensing are idle, to send a radio frame. In an early WLAN system, a station has only one NAV. After correctly receiving a radio frame, the station may update the NAV based on information about a duration (Duration) field in the radio frame. When a receiver address of a received frame is a medium access control (medium access control, MAC) address of the received frame, the station does not update the NAV. For another radio frame, when a value of a duration field in the radio frame is greater than a current NAV value of the station, the NAV is updated based on the value of the duration field. A NAV mechanism can effectively resolve a collision problem caused by a hidden node. The hidden node is a station that is not in a signal coverage area of a transmit station but whose sending may interfere with a receive station. In a process of sending a radio frame by the transmit station, the hidden node cannot sense sending of the transmit station, and therefore also sends a radio frame simultaneously. As a result, the receive station fails to correctly receive the radio frame due to interference. Due to use of the virtual carrier sense, after successfully contending for a channel, the transmit station may first exchange a short frame with the receive station, and a NAV is set for a non-target station around the transmit station and the receive station based on duration fields of two exchanged short frames. Therefore, it is ensured that the hidden node no longer contends for a channel or sends a radio frame within a time protected by the NAV. This period of time protected by the NAV is usually referred to as a transmission opportunity (transmission opportunity, TXOP).
5. Dueling-NAVs (dueling NAVs): The IEEE 802.11ax standard introduces two NAVs for refined management. One is referred to as an intra-BSS (Intra-BSS) NAV, and the other is referred to as a basic (basic) NAV. The intra-BSS NAV is updated based on an intra-BSS PPDU, and the basic NAV is updated based on another BSS (inter-BSS) PPDU or a PPDU that cannot be distinguished between an intra-BSS or an inter-BSS. The inter-BSS PPDU is simply a PPDU sent from a STA outside a current BSS, and the intra-BSS PPDU is simply a PPDU sent from a station within the current BSS. For a specific method for distinguishing between the inter-BSS PPDU and the intra-BSS PPDU, refer to the IEEE 802.11ax standard, and details are not described in this application. A station that is not a transmission opportunity holder (TXOP holder) updates an intra-BSS NAV when and only when a received frame meets all the following conditions: (1) the received frame is an intra-BSS PPDU; (2) a value of a duration field of the received frame is greater than a current intra-BSS NAV value of the station; and (3) a receiver address of the received frame is not a MAC address of the station, or the received frame does not trigger the station to immediately respond, or the receive station is a trigger frame. A station updates a basic NAV when and only when a received frame meets all the following conditions: (1) the received frame is an inter-BSS PPDU, or cannot be distinguished between an intra-BSS PPDU and an inter-BSS PPDU; (2) a value of a duration field of the received frame is greater than a current basic NAV value of the station; and (3) a receiver address of the received frame is not a MAC address of the station. When both the intra-BSS NAV value and the basic NAV value are equal to 0, the virtual carrier sense is idle. In this case, the station can perform channel contention. When the station is triggered by an associated AP to make an immediate response, the station can make the response only when the physical carrier sense of the station is idle and the basic NAV value is 0. If the basic NAV value is not 0, no response can be replied with even if a physical carrier sense result is idle.

The technical solutions provided in the embodiments of this application may be applicable to a wireless local area network (wireless local area network, WLAN) and a next-generation WLAN standard UHR scenario. For example, the technical solutions may be applicable to an IEEE 802.11 system series standard, including but not limited to an 802.11a/b/g standard, an 802.11n standard, an 802.11ac standard, an 802.11ax standard, or a next-generation standard, for example, an 802.11be standard, Wi-Fi 7, or extremely high throughput (extremely high throughput, EHT), for another example, a next-generation standard of 802.11be, Wi-Fi 8, or a next-generation standard. Currently, the WLAN uses the IEEE 802.11 series as the standard.

The WLAN may include a plurality of basic service sets (basic service sets, BSSs). A network node in the BSS is a station (station, STA). The STA includes an access point (access point, AP) station AP and a non-access point station (non-access point station, non-AP STA). Each BSS may include one AP and a plurality of non-AP STAs associated with the AP.

Although the embodiments of this application are mainly described by using a WLAN network, especially a network to which an IEEE 802.11 system standard is applied as an example, a person skilled in the art easily understands that aspects in the embodiments of this application may be extended to other networks that use various standards or protocols, for example, Bluetooth (Bluetooth), ZigBee (ZigBee), random phase multiple access (random phase multiple access, RPMA), high performance radio local area network (high performance radio local area network, HIPERLAN), wide area network (wide area network, WAN), and personal area network (personal area network, PAN), or other networks that are known currently or developed later. Therefore, regardless of a used coverage area and a used wireless access protocol, the various aspects provided in embodiments of this application are applicable to any suitable wireless network.

Embodiments of this application are further applicable to a wireless local area network system, like an internet of things (internet of things, IoT) network or a vehicle-to-everything (vehicle to X, V2X) network. Certainly, embodiments of this application are further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The communication systems applicable to this application are merely examples for description, and the communication systems applicable to this application are not limited thereto. This is described herein once for all, and details are not described below again.

The AP is also referred to as a wireless access point, a hotspot, or the like. The AP is an access point for a mobile user to access a wired network, and is mainly deployed in a home, inside a building, and inside a campus, with a typical coverage radius of tens of meters to hundreds of meters. Certainly, the AP may alternatively be deployed outdoors. The AP is equivalent to a bridge that connects a wired network and a wireless network. A main function of the AP is to connect wireless network clients together, and then connect the wireless network to the Ethernet. Specifically, the AP may be a terminal device or a network device having a wireless fidelity (wireless fidelity, Wi-Fi) chip. The AP may be a device that supports any one of the foregoing WLAN or IEEE 802.11 system series standards. For example, the AP may be an AP device such as a communication server, a router, a switch, or a bridge.

The non-AP STA may be a wireless communication chip, a wireless sensor, or a wireless communication terminal, for example, a mobile phone supporting a Wi-Fi communication function, a tablet computer supporting a Wi-Fi communication function, a laptop computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, and a computer supporting a Wi-Fi communication function. For example, the station may support any one of the foregoing WLAN or IEEE 802.11 system series standards. Further optionally, the station supports multiple WLAN standards, such as 802.11ac, 802.11n, 802.11g, 802.11b, and 802.11a.

In 802.11ax, a BSS color is introduced as an identifier of a BSS, and is used to assist a receive STA in identifying a source of a received PPDU, for example, from a local BSS or from an overlapped basic service set (overlapped basic service set, OBSS), so that the STA can use a spatial multiplexing channel access mechanism or save power.

A high-efficiency signal field (High efficiency SIGNAL field, HE-SIG) in the PPDU includes a BSS color field (specified by a current standard to be 6 bits, that is, an available BSS color value is an integer ranging from 0 to 63), and indicates a BSS color of the transmission frame. Generally, the BSS color is set by the AP. After selecting the BSS color of the local BSS, the AP notifies all STAs of the local BSS of the selected BSS color value. When sending PPDUs, all the STAs of the BSS use the BSS color, that is, a value of the BSS color field is set to the BSS color. Generally, one BSS has only one BSS color. BSS colors of different BSSs are set by respective APs. Theoretically, BSS colors of different BSSs are different. Therefore, after receiving a PPDU, a STA may determine, by reading a BSS color field, whether the received PPDU is from a local BSS or an OBSS.

FIG. 2 is a diagram of an application scenario according to an embodiment of this application.

As shown in FIG. 2, a BSS 1 includes an AP 101, a STA 103, and a STA 104. ABSS 2 includes an AP 102 and a STA 105. The STA 104, the AP 101, and the AP 102 are located in an overlapping area of coverage areas of the AP 101 and the AP 102. The BSS 1 and the BSS 2 are OBSSs of each other, that is, the OBSS of the BSS 1 includes the BSS 2, and the OBSS of the BSS 2 includes the BSS 1.

In a conventional technical solution, how to perform preemption in a BSS is mainly considered, but the problem of how to avoid that an OBSS occupies a channel for a long time is not considered. For example, the AP 102 may occupy a channel for a long time. Because the AP 101, the STA 104, the STA 103, and the AP 102 are located in different BSSs, the AP 101, the STA 104, and the STA 103 cannot perform preemption.

FIG. 3 is a diagram of a communication apparatus according to an embodiment of this application. The communication apparatus may include one or more of the following components: a processor 310, a transmitter 320, a memory 330, a receiver 340, a signal detector 350, a digital signal processor 360, and a user interface 370. It should be understood that the communication apparatus may include only some modules in the figure. For example, the communication apparatus includes a processor 310 and a memory 330. In some possible implementations, the communication apparatus may be an AP or a non-AP STA.

In the embodiments of this application, a low-latency service is a service whose latency requirement needs to be met by using a preemption mechanism. Generally, the latency requirement of the service is extremely high, and is at a millisecond level. A non-low-latency service may also have a latency requirement, and the latency requirement of the non-low-latency service is lower than that of the low-latency service. The non-low-latency service, for example, file copying, may also have ultra-long latency tolerance, that is, has no latency requirement. It should be understood that the low-latency service may be a service whose latency requirement is less than a preset time threshold, and the non-low-latency service may be a service whose latency requirement is greater than the preset time threshold or a service without a latency requirement.

It should be understood that the two services in the embodiments of this application may also be referred to as a low-latency service and a high-latency service, a low-latency service and a relatively low-latency service, or the like. The specific name should not be understood as a limitation on this application. For ease of description, the low-latency service and the non-low-latency service are collectively used in this application.

The method provided in this application is performed for a PPDU-based preemption mechanism. In the PPDU-based preemption mechanism, the non-low-latency service is divided into several short PPDUs for sequential transmission. If a new low-latency service packet arrives in a process of transmitting a short PPDU, the low-latency service packet is preferentially transmitted after the transmission of the short PPDU ends, and a remaining non-low-latency service packet is transmitted after the transmission of the low-latency service packet ends. According to the method provided in this application, a problem that a station in a local BSS cannot perform a preemption operation because a time for continuously using a channel in an OBSS is excessively long can be resolved.

In the PPDU-based preemption mechanism, a set of EDCA contention parameters is provided, and the EDCA contention parameters may be carried in a management frame broadcast by the AP. Specifically, the AP broadcasts a preemption EDCA parameter set element (Preemption EDCA Parameter Set element) and an EDCA parameter set element (EDCA Parameter Set element), and a station that supports the preemption mechanism uses a parameter in the preemption EDCA parameter set element (Preemption EDCA Parameter Set element) to perform contention and data sending. A station that does not support the preemption mechanism uses a parameter in the EDCA parameter set element (EDCA Parameter Set element) to perform contention and data sending. It should be understood that the preemption EDCA parameter set element and the EDCA parameter set element are merely examples of names of the EDCA contention parameters. A specific name of the element is not limited in this application.

In some possible implementations, for a UHR station, the station that does not support the preemption mechanism includes a station that does not support a UHR standard, and is usually referred to as a legacy (legacy) station or a pre-UHR (Pre-UHR) station. The station that does not support the preemption mechanism may further include a station that supports the UHR standard but does not support the preemption mechanism. It should be understood that, if a next-generation standard of UHR uses the PPDU-based preemption mechanism, the UHR station is a station that does not support the preemption mechanism, and a next-generation station of UHR may be classified into two types of stations: a station that supports preemption and a station that does not support preemption.

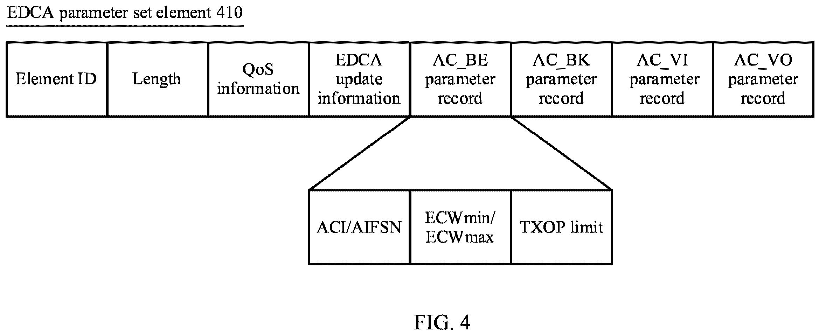

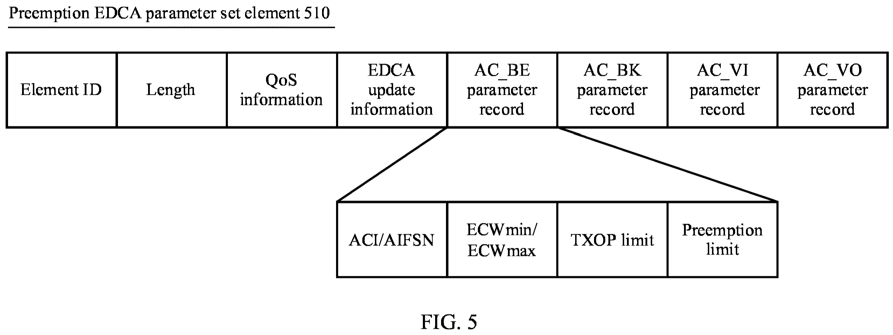

FIG. 4 is a diagram of a structure of an EDCA parameter set element according to an embodiment of this application. FIG. 5 is a diagram of a structure of a preemption EDCA parameter set element according to an embodiment of this application.

A quality of service (quality of service, QoS) AP may broadcast an EDCA parameter set element 410 and a preemption EDCA parameter set element 510, to indicate a contention parameter used by a non-AP STA in a BSS. Both the EDCA parameter set element 410 and the preemption EDCA parameter set element 510 include any one or more or all of the following: an element identity document (identity document, ID), a length of a parameter set element, QoS information, EDCA update information, an AC_BE parameter record, an AC_BK parameter record, an AC_VI parameter record, and an AC_VO parameter record, but specific parameter values may be different.

The station identifies the EDCA parameter set element 410 and the preemption EDCA parameter set element 510 through the element ID. For example, the station that does not support the preemption mechanism receives the contention parameter, identifies, through the element ID, that the contention parameter is the EDCA parameter set element 410, and then may perform contention and data sending through the parameter in the EDCA parameter set element 410. The station that supports the preemption mechanism receives the contention parameter, identifies, through the element ID, that the contention parameter is the preemption EDCA parameter set element 510, and then may perform contention and data sending through the parameter in the preemption EDCA parameter set element 510.

The AC_BE parameter records in the EDCA parameter set element 410 and the preemption EDCA parameter set element 510 include one or more or all of the following: an access category index (access category index, ACI), an arbitration interframe space number (arbitration interframe space number, AIFSN) field, an exponent form of cwmin (exponent form of cwmin, ECWmin), an exponent form of cwmax (exponent form of cwmax, ECWmax), and a transmission opportunity (transmission opportunity, TXOP) limit. It should be understood that in this application, only the AC_BE parameter record is used as an example. The AC_BK parameter record, the AC_VI parameter record, and the AC_VO parameter record may also include a same field as the AC_BE parameter record.

Optionally, the preemption EDCA parameter set element 510 may include an ACI/AIFSN field and an ECWmin/ECWmax field that have same meanings as those in the EDCA parameter set element 410, or may not include the ACI/AIFSN field and the ECWmin/ECWmax field but reuse a same value in the EDCA parameter set element 410.

The ACI/AIFSN field indicates a service type. The ECWmin/ECWmax field is used to determine a minimum value and a maximum value of a backoff window, that is, a minimum contention window (minimum contention window, CWmin) and a maximum contention window (maximum contention window, CWmax), CWmin = 2^{ECWmin} - 1, and CWmax = 2^{ECWmax} - 1. The transmission opportunity (transmission opportunity, TXOP) limit (TXOP Limit) field indicates a maximum time length in which a station is allowed to continuously use a channel after obtaining the channel through contention, and a unit of the TXOP limit field is 32 microseconds.

In a use process, the AP sets a relatively large TXOP limit value for the preemption EDCA parameter set element 510, that is, makes a TXOP limit greater than a preset threshold, so that the station that supports preemption can continuously use a channel for a long time after successfully obtaining the channel through contention, thereby improving system efficiency. The AP sets a relatively small TXOP limit in the EDCA parameter set element 410, that is, makes the TXOP limit less than the preset threshold, so as to control a maximum value of a time length in which the station that does not support preemption continuously uses the channel, thereby providing more channel access opportunities for the station that supports preemption. It should be understood that, in a typical setting manner, the TXOP limit in the preemption EDCA parameter set element 510 is greater than or equal to the TXOP limit in the EDCA parameter set element 410.

Optionally, the preemption EDCA parameter set element 510 may further include a preemption limit (Preemption Limit) field. The preemption limit field indicates a maximum time length of a PPDU, that is, makes a time length of a PPDU sent by the station that supports preemption less than a preemption limit, thereby avoiding that a non-low-latency service occupies a channel for a long time for use. It should be understood that, in a typical setting manner, the preemption limit in the preemption EDCA parameter set element 510 is less than or equal to the TXOP limit in the preemption EDCA parameter set element 510.

It should be understood that, for information exchange with a response frame, the preemption limit should include a total time limit for the information exchange. For example, for interaction of data/block acknowledgment (data/BA), a sum of a PPDU carrying data, a PPDU carrying BA, and a short interframe space (short interframe space, SIFS) between the two cannot exceed the preemption limit.

Optionally, the preemption EDCA parameter set element 510 may alternatively be provided with only the preemption limit field, but not the TXOP limit field. Alternatively, the preemption EDCA parameter set element 510 may be provided with only the TXOP limit field but not the preemption limit field. The figure should not be construed as a limitation on this application.

It should be understood that names of the EDCA parameter set element 410 and the preemption EDCA parameter set element 510 and element names in the EDCA parameter set element 410 and the preemption EDCA parameter set element 510 are merely examples, and should not be construed as a limitation on this application.

It should be understood that one access category (access category, AC) may include a plurality of services. If one access category includes both a low-latency service and a non-low-latency service, the preemption limit field is applicable to all services. This operation is simple. Optionally, the preemption limit field may alternatively be applicable only to a non-low-latency service. If a service that is being transmitted is a low-latency service, there is no need to grant another low-latency service an access opportunity through the preemption limit field. This operation helps improve system efficiency.

In the PPDU-based preemption mechanism, a relatively good balance is achieved between the service latency and the system efficiency through setting the EDCA parameter set element 410 and the preemption EDCA parameter set element 510.

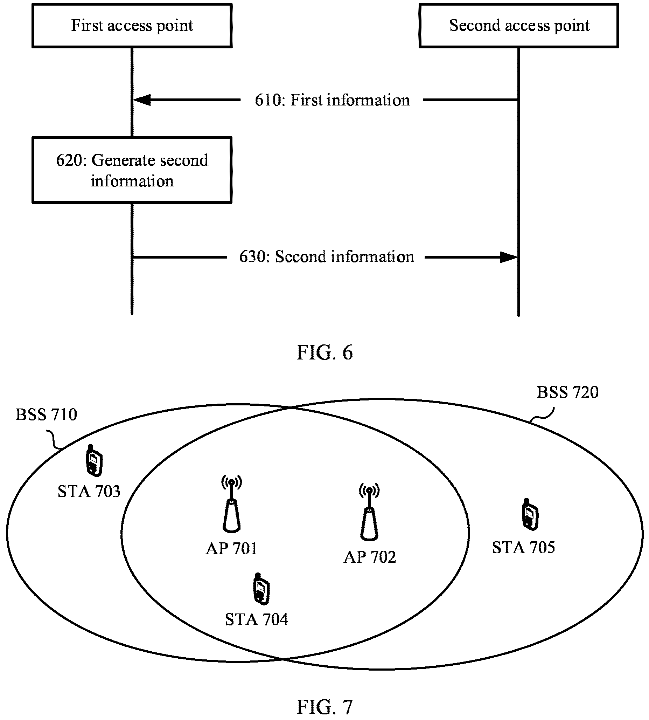

FIG. 6 is a schematic flowchart of a communication method according to an embodiment of this application.

610: Receive first information from a second access point.

A first access point belongs to a first BSS, the first information indicates a first maximum time length in which a first station sends a PPDU, the second access point and the first station belong to a second BSS, a coverage area of the second BSS has an overlapping part with a coverage area of the first BSS, and the first station supports preemption.

It should be understood that, that the coverage area of the second BSS has the overlapping part with the coverage area of the first BSS indicates that the first BSS and the second BSS are OBSSs of each other, that is, the OBSS of the first BSS includes the second BSS, and the OBSS of the second BSS includes the first BSS.

620: Generate second information.

The second information indicates a second maximum time length in which a second station sends a PPDU, the second maximum time length is less than or equal to the first maximum time length, the second station belongs to the first BSS, and the second station supports preemption.

It should be understood that the second information is set by the first access point based on the received first information, and the second maximum time length is less than or equal to the first maximum time length. Because the operation of setting the second information is mutual for APs that are OBSSs of each other, all BSSs that support preemption set the second information to a same value, namely, a minimum value that is of multiple pieces of second information and that each AP originally wants to set.

630: Send the second information.

In a possible implementation, the first information may be carried by a field in a beacon frame sent by the second access point, and the second information may be carried by a field in a beacon frame sent by the first access point.

It should be understood that the first access point may send the second information in a broadcast manner. This figure should not be construed as a limitation on this application.

FIG. 7 is a diagram of another application scenario according to an embodiment of this application.

As shown in FIG. 7, a BSS 710 includes an AP 701, a STA 703, and a STA 704. A BSS 720 includes an AP 702 and a STA 705. The STA 704, the AP 701, and the AP 702 are located in an overlapping area of coverage areas of the AP 701 and the AP 702. The BSS 710 and the BSS 720 are OBSSs of each other, that is, the OBSS of the BSS 710 includes the BSS 720, and the OBSS of the BSS 720 includes the BSS 710.

In some possible implementations, the BSS 710 in FIG. 7 corresponds to the first BSS described in FIG. 6, the BSS 720 corresponds to the second BSS described in FIG. 6, the AP 701 corresponds to the first access point described in FIG. 6, the AP 702 corresponds to the second access point described in FIG. 6, the STA 705 corresponds to the first station described in FIG. 6, and the STA 703 and the STA 704 correspond to the second station described in FIG. 6.

The AP 701 is an AP that supports preemption. For example, the AP 701 may claim, in a sent beacon frame, that the AP 701 supports preemption. For example, a preemption support (Preemption Support) field may be set in a UHR capabilities element (UHR capabilities element). The preemption support field being set to 1 indicates that preemption is supported, and the preemption support field being set to 0 indicates that preemption is not supported; or vice versa. It should be understood that a specific name of the UHR capabilities element is not limited in this application. If a preemption mechanism is introduced in a next-generation UHR standard, a capabilities element (capabilities element) with a different name may be used. A specific name of the preemption support field is not limited in this application either.

The AP 701 may learn, through a beacon frame received from an OBSS AP or through another method, for example, through wired transmission, whether the OBSS AP supports preemption. In this embodiment of this application, the method provided in this application is described in detail by using an example in which the AP 702 is an OBSS AP of the AP 701. It should be understood that the AP 701 may correspond to a plurality of OBSS APs. The figure is merely used to facilitate understanding of the method provided in this application, and should not be construed as a limitation on this application.

In the embodiments of this application, a PPDU that allows a preemption operation after the PPDU ends is referred to as a preemption allowed PPDU (Preemption allowed PPDU), and a PPDU that is sent according to a preemption procedure is referred to as a preemption PPDU (Preemption PPDU). A specific name is not limited in this application, and the name should not be understood as a limitation on this application. In this embodiment of this application, both the AP and the STA that support preemption can receive or send the preemption allowed PPDU.

It should be understood that, in this embodiment of this application, a station that sends the preemption allowed PPDU is usually a transmission opportunity holder (TXOP holder), but the station that sends the preemption allowed PPDU is also applicable to a scenario in which a channel use right is transferred or specified to another station. For example, an AP first becomes a transmission opportunity holder through contention, and the AP transfers a channel use right to the AP 702 through triggered TXOP sharing (triggered TXOP sharing) that is also referred to as an MU-RTS TXS mechanism or a reverse direction grant (reverse direction grant, RDG) mechanism. In this case, the AP 702 may also send a preemption allowed PPDU. For ease of description, in this embodiment of this application, the AP 702 is used as a transmission opportunity holder for description.

The AP 701 may make, through parameter setting, a TXOP limit (TXOP limit) and/or a preemption limit (Preemption Limit) in a BSS (namely, the BSS 710) of the AP 701 less than or equal to a parameter corresponding to the BSS 720. Specifically, the following manners are included:

Manner 1: The AP 701 sets the TXOP limit of the AP 701 to be less than or equal to a TXOP limit of the AP 702.

For example, in this embodiment of this application, the TXOP limit of the AP 701 is referred to as a TXOP limit 1, and the TXOP limit of the AP 702 is referred to as a TXOP limit 2.

The AP 701 receives the TXOP limit 2 sent by the AP 702, where the TXOP limit 2 may be sent by using a beacon frame of the AP 702. The AP 701 may set a TXOP limit 1 in an EDCA parameter set element 410 of the AP 701 to be less than or equal to a TXOP limit 2 in an EDCA parameter set element 410 of the AP 702. The AP 701 may alternatively set a TXOP limit 1 in a preemption EDCA parameter set element 510 of the AP 701 to be less than or equal to a TXOP limit 2 in a preemption EDCA parameter set element 510 of the AP 702.

Because the operation of setting the TXOP limit is mutual for APs that are OBSSs of each other, all BSSs that support preemption set the TXOP limits to a same value, namely, a minimum value that is of the plurality of TXOP limits and that each AP originally wants to set. It should be understood that the BSS that supports preemption means that the AP in the BSS supports preemption. For example, FIG. 7 is used as an example. The BSS 710 and the BSS 720 are OBSSs of each other, that is, the OBSS of the BSS 710 includes the BSS 720, and the OBSS of the BSS 720 includes the BSS 710. The AP 701 receives the TXOP limit 2 sent by the AP 702, and then sets the TXOP limit 1 to be less than or equal to the TXOP limit 2, and then the AP 701 sends the TXOP limit 1. Because the AP 701 is an OBSS AP of the AP 702, the AP 702 receives the TXOP limit 1 sent by the AP 701, and then sets the TXOP limit 2 to be less than or equal to the TXOP limit 1. This cycle is repeated until the BSS 710 and the BSS 720 set the TXOP limits to a same value, namely, a minimum value that is of the plurality of TXOP limits and that the AP 701 and the AP 702 respectively originally want to set.

In this manner, after the STA 705 or the AP 702 in the BSS 720 obtains a TXOP through contention, the channel is released again within a time not exceeding the TXOP limit. Therefore, the station and/or the access point in the BSS 710 may have more opportunities to transmit a low-latency service.

Manner 2: The AP 701 sets the preemption limit of the AP 701 to be less than or equal to a preemption limit of the AP 702.

For example, in this embodiment of this application, the preemption limit of the AP 701 is referred to as a preemption limit 1, and the preemption limit of the AP 702 is referred to as a preemption limit 2.

The AP 701 receives the preemption limit 2 sent by the AP 702, where the preemption limit 2 may be sent by using a beacon frame of the AP 702. The AP 701 may set a preemption limit 1 in a preemption EDCA parameter set element 510 of the AP 701 to be less than or equal to a preemption limit 2 in a preemption EDCA parameter set element 510 of the AP 702.

Because the operation of setting the preemption limit is mutual for APs that are OBSSs of each other, all BSSs that support preemption set the preemption limits to a same value, namely, a minimum value that is of the plurality of preemption limits and that each AP originally wants to set. For example, FIG. 7 is used as an example. The BSS 710 and the BSS 720 are OBSSs of each other, that is, the OBSS of the BSS 710 includes the BSS 720, and the OBSS of the BSS 720 includes the BSS 710. The AP 701 receives the preemption limit 2 sent by the AP 702, and then sets the preemption limit 1 to be less than or equal to the preemption limit 2, and then the AP 701 sends the preemption limit 1. Because the AP 701 is an OBSS AP of the AP 702, the AP 702 receives the preemption limit 1 sent by the AP 701, and then sets the preemption limit 2 to be less than or equal to the preemption limit 1. This cycle is repeated until the BSS 710 and the BSS 720 set the preemption limits to a same value, namely, a minimum value that is of the plurality of preemption limits and that the AP 701 and the AP 702 respectively originally want to set.

In this manner, after the STA 705 or the AP 702 in the BSS 720 obtains a TXOP through contention, a length of a PPDU sent by the STA 705 or the AP 702 does not exceed a preemption limit. Therefore, the station and/or the access point in the BSS 710 may have more opportunities to transmit a low-latency service.

It should be understood that, before performing preemption to send a low-latency service, the STA or the AP in the BSS 710 may first determine that the BSS 720 supports preemption. For example, if the STA or the AP in the BSS 710 can receive the preemption limit sent by the AP in the BSS 720, it may be determined that the AP in the BSS 720 supports preemption. Alternatively, the STA or the AP in the BSS 710 may parse the beacon frame sent by the AP in the BSS 720, to determine that the BSS 720 supports the preemption mechanism. Optionally, the AP in the BSS 710 may further broadcast a list of all OBSSs that support preemption, and the STA in the BSS 710 learns, from the broadcast list, that the BSS 720 supports preemption.

It should be understood that, after the STA or the AP in the BSS 720 obtains a TXOP, the STA or the AP in the BSS 710 sets a basic network allocation vector (basic network allocation vector, basic NAV) based on a received frame sent by the STA or the AP in the BSS 720. According to a rule in a current standard, a station or an access point whose basic NAV value is not equal to zero is not allowed to actively contend for a channel or send data. If the STA or the AP in the BSS 710 wants to send the low-latency service through preemption in this case, the basic NAV set by the STA or the AP in the BSS 720 needs to be ignored. That is, even if the value of the basic NAV of the STA or the AP in the BSS 710 is greater than 0, the value is considered as 0, and preemption is initiated.

Manner 3: Both the manner 1 and the manner 2 are satisfied.

The AP 701 sets the TXOP limit of the AP 701 to be less than or equal to a TXOP limit of the AP 702, and the AP 701 sets the preemption limit of the AP 701 to be less than or equal to a preemption limit of the AP 702. In addition, the STA or the AP in the BSS 710 ignores the basic NAV set by the STA or the AP in the BSS 720, so as to send the low-latency service through preemption.

According to the communication method provided in this embodiment of this application, impact of the OBSS on the preemption service is considered, and a TXOP limit parameter or a preemption limit parameter is set, so that respective stations and access points have more opportunities to send the low-latency service.

In some possible application scenarios, some APs only want to implement preemption in the local BSS or some OBSSs associated with the local BSS, and do not want to consider transmission in all OBSSs that support preemption. Therefore, in this embodiment of this application, a preemption group (preemption group) may be set. The preemption group field may be a field in a beacon frame sent by an AP, for example, may be a field in a preemption element (Preemption element), a UHR operation element (UHR Operation element), or another element. Optionally, the preemption group field may alternatively be placed in a physical layer signal (SIG) field of a PPDU sent by an AP.

Optionally, the preemption group field may include one or more bits. For example, the preemption group field is 1 bit, and the preemption group field being set to 1 indicates that a BSS in which the AP is located joins a preemption group, and otherwise indicates that the BSS in which the AP is located does not join the preemption group. Alternatively, the preemption group field being set to 0 indicates that the BSS in which the AP is located joins the preemption group, and otherwise indicates that the BSS in which the AP is located does not join the preemption group. The AP performs operations in the three manners shown in FIG. 7 only for the OBSSs in the preemption group.

For example, the preemption group field is a plurality of bits. The preemption group field being set to 0 indicates that the BSS in which the AP is located does not join any preemption group, and the preemption group field not being set to 0 indicates that the BSS in which the AP is located joins a specific preemption group. For example, the preemption group field being set to "11" indicates that the BSS in which the AP is located joins a third preemption group. The AP performs operations in the three manners shown in FIG. 7 only for an OBSS that joins a same preemption group as the AP.

According to the communication method provided in this embodiment of this application, the preemption group field is set, so that a BSS that supports preemption can flexibly choose to join or not join the preemption group, thereby controlling a range of an access point or a station to perform a preemption operation.

In some possible application scenarios, the AP expects to independently select an OBSS that is in a same preemption group as the AP. The AP performs operations in the three manners shown in FIG. 7 only for an OBSS that joins a same preemption group as the AP. In this embodiment of this application, a preemption group member field may be set to indicate a BSS that is in a same preemption group as the AP.

In some possible implementations, the preemption group member field may be a preemption BSS color bitmap (Preemption BSS Color Bitmap) field. For example, a length of the preemption BSS color bitmap field may be 64 bits. Currently, the BSS color (BSS color) is 6 bits, and there may be a maximum of 64 different BSS colors. Therefore, each bit in the 64 bits of the preemption BSS color bitmap field may correspond to one BSS color.

It should be understood that the preemption BSS color bitmap is a bitmap, indicating a BSS color value used by a member of the preemption group to which the AP belongs. Each bit of the bitmap corresponds to one of the 64 BSS colors, where the lowest-numbered bit corresponds to the BSS color value 0, and the highest-numbered bit corresponds to the BSS color value 63. For example, if a bit in the bitmap is 1, it indicates that at least one BSS that uses a BSS color value corresponding to the bit is in a same preemption group as the AP. If a bit in the bitmap is 0, it indicates that no BSS in the preemption group in which the AP is located uses a BSS color value corresponding to the bit. The BSS color value 0 corresponds to a reserved bit in the bitmap.

It should be understood that a length of the preemption BSS color bitmap field may be related to a quantity of OBSSs. When the quantity of OBSSs is relatively small, a length less than 64 bits may be used. The length of the preemption BSS color bitmap field is not specified. This example should not be understood as a limitation on this application.

In some possible implementations, a member field of the preemption group may be a preemption partial BSSID bitmap (Preemption Partial BSSID Bitmap) field. The BSS identity document (BSS identity document, BSSID) is 6 bytes, that is, 48 bits. If a bitmap (bitmap) indicates all possible BSSID values in a traversal manner, a large amount of space is wasted. Therefore, in this embodiment of this application, some bits in the BSSID indicate the BSS that is located in the same preemption group as the AP. For example, the preemption partial BSSID bitmap may be selected as 64 bits that respectively correspond to one value in BSSID [39:44] or may respectively correspond to one value in BSSID [38:43]. It should be understood that A [a:b] is a range of A from an a^{th} bit to a b^{th} bit.

It should be understood that the preemption partial BSSID bitmap field is a bitmap, and indicates a part of a BSSID value of a member that is located in a same preemption group as the AP. For example, each bit of the bitmap corresponds to one of 64 possible values of the BSSID [39:44], where the bit with the lowest number corresponds to a partial BSSID value 0, and the bit with the highest number corresponds to a partial BSSID value 63. For example, if a bit in the bitmap is 1, it indicates that at least one BSS that uses a partial BSSID value corresponding to the bit is in a same preemption group as the AP. If a bit in the bitmap is 0, it indicates that no BSS in the preemption group in which the AP is located uses a partial BSSID value corresponding to the bit.

It should be understood that the preemption partial BSSID bitmap being 64 bits is merely an example. This example should not be understood as a limitation on this application. In an actual application scenario, the preemption partial BSSID bitmap may be selected as a specific length as required, for example, 32 bits or 16 bits, to correspond to a specified range of BSSIDs.

In this embodiment of this application, the AP may indicate, by using any one of the preemption BSS color bitmap field or the preemption partial BSSID bitmap field, the BSS that is in the same preemption group as the AP. Optionally, the AP may alternatively indicate, by using both the preemption BSS color bitmap field and the preemption partial BSSID bitmap field, the BSS that is in the same preemption group as the AP. This is not limited in this application. The AP performs operations in the three manners shown in FIG. 7 only for an OBSS that joins a same preemption group as the AP, that is, performs the operations in the three manners shown in FIG. 7 for an OBSS corresponding to a bit that is set to 1 in the preemption BSS color bitmap and/or the preemption partial BSSID bitmap.

According to the communication method provided in this embodiment of this application, the preemption group member field is set, so that a manner of establishing the preemption group is more flexible.

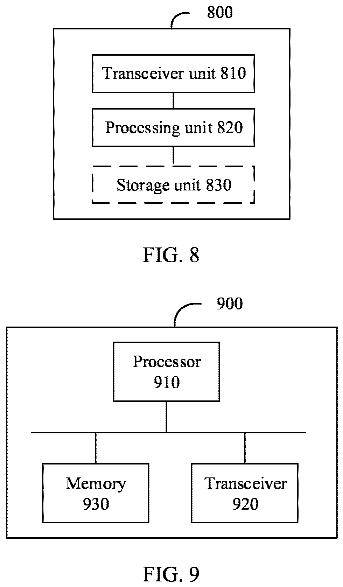

The foregoing describes the method provided in the embodiments of this application. In the following, apparatuses provided in the embodiments of this application are described in detail with reference to FIG. 8 and FIG. 9.

FIG. 8 is a block diagram of a communication apparatus according to an embodiment of this application. As shown in FIG. 8, the communication apparatus 800 may include a transceiver unit 810 and a processing unit 820.

It should be understood that the communication apparatus 800 may be corresponding to the first access point, the second access point, or the second station in the embodiments of this application. In an example description, the communication apparatus 800 can implement actions, steps, or methods related to the first access point, the second access point, or the second station in FIG. 4 to FIG. 7 in the foregoing method embodiments.

Refer to the structure of the communication apparatus shown in FIG. 8, this application provides a communication apparatus. The communication apparatus may be disposed in a first access point. The communication apparatus includes: a transceiver unit, configured to receive first information from a second access point, where the first information indicates a first maximum time length in which a first station sends a physical layer protocol data unit PPDU, the second access point and the first station belong to a second BSS, a coverage area of the second BSS has an overlapping part with a coverage area of the first BSS, the first station supports preemption, and the first access point belongs to the first BSS; a processing unit, configured to generate second information, where the second information indicates a second maximum time length in which a second station sends a PPDU, the second maximum time length is less than or equal to the first maximum time length, the second station belongs to the first BSS, and the second station supports preemption; and a transceiver unit, configured to send the second information.

Optionally, in some implementations, the processing unit is further configured to determine that a basic network allocation vector of the first access point is set based on a frame sent by the second access point or the first station; and the processing unit is further configured to ignore the basic network allocation vector.

Optionally, in some implementations, the transceiver unit is further configured to receive third information from the second access point, where the third information indicates a third maximum time length in which the first station is allowed to continuously use a channel after obtaining the channel through contention; the processing unit is further configured to generate fourth information, where the fourth information indicates a fourth maximum time length in which the second station is allowed to continuously use a channel after obtaining the channel through contention, and the fourth maximum time length is less than or equal to the third maximum time length; and the transceiver unit is further configured to send the fourth information.

Optionally, in some implementations, the transceiver unit is further configured to receive fifth information from the second access point, where the fifth information indicates a group in which the second BSS is located; and the processing unit is further configured to determine, based on the fifth information, that the second BSS and the first BSS are in a same group.

Optionally, in some implementations, the fifth information is carried by a field in a beacon frame sent by the second access point or a physical layer signal SIG field of a first PPDU, and the first PPDU is a PPDU sent by the second access point.

Optionally, in some implementations, the transceiver unit is further configured to send sixth information, where the sixth information indicates a BSS that is located in a same group as the first BSS.

Optionally, in some implementations, the sixth information indicates a color or a partial ID of a BSS that is in a same group as the first BSS.

Optionally, in some implementations, a length of the sixth information is 64 bits.

Refer to the structure of the communication apparatus shown in FIG. 8, this application further provides a communication apparatus. The communication apparatus may be disposed in a first access point. The communication apparatus includes: a transceiver unit, configured to receive third information from the second access point, where the third information indicates a third maximum time length in which a first station is allowed to continuously use a channel after obtaining the channel through contention, the second access point and the first station belong to a second BSS, a coverage area of the second BSS has an overlapping part with a coverage area of the first BSS, the first station supports preemption, and the first access point belongs to the first BSS; a processing unit, configured to generate fourth information, where the fourth information indicates a fourth maximum time length in which a second station is allowed to continuously use a channel after obtaining the channel through contention, the fourth maximum time length is less than or equal to the third maximum time length, the second station belongs to the first BSS, and the second station supports preemption; and a transceiver unit, configured to send the fourth information.

Optionally, in some implementations, the transceiver unit is further configured to receive first information from the second access point, where the first information indicates a first maximum time length in which the first station sends a physical layer protocol data unit PPDU; the processing unit is further configured to generate second information, where the second information indicates a second maximum time length in which the second station sends a PPDU, and the second maximum time length is less than or equal to the first maximum time length; and the transceiver unit is further configured to send the second information.

Optionally, in some implementations, the processing unit is further configured to determine that a basic network allocation vector of the first access point is set based on a frame sent by the second access point or the first station; and the processing unit is further configured to ignore the basic network allocation vector.

Optionally, in some implementations, the transceiver unit is further configured to receive fifth information from the second access point, where the fifth information indicates a group in which the second BSS is located; and the processing unit is further configured to determine, based on the fifth information, that the second BSS and the first BSS are in a same group.

Optionally, in some implementations, the fifth information is carried by a field in a beacon frame sent by the second access point or a physical layer signal SIG field of a first PPDU, and the first PPDU is a PPDU sent by the second access point.

Optionally, in some implementations, the transceiver unit is further configured to send sixth information, where the sixth information indicates a BSS that is located in a same group as the first BSS.

Optionally, in some implementations, the sixth information indicates a color or a partial ID of a BSS that is in a same group as the first BSS.

Optionally, in some implementations, a length of the sixth information is 64 bits.

This application further provides a communication apparatus. The communication apparatus may be disposed in a second access point. The communication apparatus includes a transceiver unit, configured to send first information to a first access point, where the first access point belongs to a first BSS, the first information indicates a first maximum time length in which a first station sends a physical layer protocol data unit PPDU, the second access point and the first station belong to a second BSS, a coverage area of the second BSS has an overlapping part with a coverage area of the first BSS, the first station supports preemption, and the second access point belongs to the second BSS. The transceiver unit is further configured to receive second information from the first access point, where the second information indicates a second maximum time length in which a second station sends a PPDU, the second maximum time length is less than or equal to the first maximum time length, the second station belongs to the first BSS, and the second station supports preemption.

Optionally, in some implementations, the transceiver unit is further configured to send third information to the first access point, where the third information indicates a third maximum time length in which the first station is allowed to continuously use a channel after obtaining the channel through contention; and the transceiver unit is further configured to receive fourth information from the first access point, where the fourth information indicates a fourth maximum time length in which the second station is allowed to continuously use a channel after obtaining the channel through contention, and the fourth maximum time length is less than or equal to the third maximum time length.

Optionally, in some implementations, the transceiver unit is further configured to send fifth information, where the fifth information indicates a group in which the second BSS is located.

Optionally, in some implementations, the fifth information is carried by a field in a beacon frame sent by the second access point or a physical layer SIG field of a first PPDU, where the first PPDU is a PPDU sent by the second access point.

Optionally, in some implementations, the transceiver unit is further configured to receive sixth information from the first access point, where the sixth information indicates a BSS that is located in a same group as the first BSS.

Optionally, in some implementations, the sixth information indicates a color or a partial ID of a BSS that is in a same group as the first BSS.

Optionally, in some implementations, a length of the sixth information is 64 bits.

Refer to the structure of the communication apparatus shown in FIG. 8, this application further provides a communication apparatus. The communication apparatus may be disposed in a second station. The communication apparatus includes: a transceiver unit, configured to receive fifth information from a second access point, where the fifth information indicates a group in which a second BSS is located, a coverage area of the second BSS has an overlapping part with a coverage area of a first BSS, the second access point belongs to the second BSS, and the second station belongs to the first BSS; and a processing unit, configured to determine, based on the fifth information, that the second BSS and the first BSS are in a same group.

Optionally, in some implementations, the fifth information is carried by a field in a beacon frame sent by the second access point or a physical layer SIG field of a first PPDU, where the first PPDU is a PPDU sent by the second access point.

Optionally, in some implementations, the transceiver unit is further configured to receive seventh information, where the seventh information indicates whether the second access point supports preemption; and the processing unit is further configured to determine, based on the seventh information, that the second access point supports preemption.

Optionally, in some implementations, the seventh information is carried by a field in a beacon frame sent by the first access point or the second access point, and the first access point belongs to the first BSS.

Optionally, in some implementations, the processing unit is further configured to determine that a basic network allocation vector of the second station is set based on a frame sent by the second access point or the first station, where the first station belongs to the second BSS, and the first station supports preemption; and the processing unit is further configured to ignore the basic network allocation vector.

It should be understood that, when the communication apparatus 800 is a chip, the chip includes a transceiver unit and a processing unit. The transceiver unit may be an input/output circuit or a communication interface. The processing unit may be a processor, a microprocessor, or an integrated circuit integrated on the chip.

The transceiver unit 810 is configured to implement signal receiving and sending operations of the communication apparatus 800, and the processing unit 820 is configured to implement a signal processing operation of the communication apparatus 800.

Optionally, the communication apparatus 800 may further include a storage unit 830, and the storage unit 830 is configured to store instructions.

FIG. 9 is a block diagram of a communication device according to an embodiment of this application. As shown in the figure, the communication device 900 includes at least one processor 910, and may further include a transceiver 920. Optionally, the communication device 900 further includes a memory 930, configured to store instructions. The processor 910 is coupled to the memory 930, and is configured to execute the instructions stored in the memory 930, to control the transceiver 920 to send a signal and/or receive a signal.

It should be understood that the processor 910 and the memory 930 may be combined into one processing apparatus, and the processor 910 is configured to execute program code stored in the memory 930 to implement the foregoing functions. During specific implementation, the memory 930 may alternatively be integrated in the processor 910, or may be independent of the processor 910.

It should be further understood that the transceiver 920 may include a receiver (or referred to as a receiving machine) and a transmitter (or referred to as a transmitting machine). The transceiver 920 may further include an antenna. There may be one or more antennas. The transceiver 920 may alternatively be a communication interface or an interface circuit.

When the communication device 900 is a chip, the chip includes a transceiver unit and a processing unit. The transceiver unit may be an input/output circuit or a communication interface. The processing unit may be a processor, a microprocessor, or an integrated circuit integrated on the chip. An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

An embodiment of this application further provides a computer-readable storage medium. The computer-readable storage medium stores computer instructions for implementing the methods performed by the first access point in the foregoing method embodiments.

For example, when the computer program is executed by a computer, the computer can implement the methods performed by the first access point in the foregoing method embodiments.

An embodiment of this application further provides a computer-readable storage medium. The computer-readable storage medium stores computer instructions for implementing the methods performed by the second access point in the foregoing method embodiments.

For example, when the computer program is executed by a computer, the computer can implement the methods performed by the second access point in the foregoing method embodiments.

An embodiment of this application further provides a computer-readable storage medium. The computer-readable storage medium stores computer instructions for implementing the methods performed by the second station in the foregoing method embodiments.

For example, when the computer program is executed by a computer, the computer can implement the methods performed by the second station in the foregoing method embodiments.

An embodiment of this application further provides a computer program product including instructions. When the instructions are executed by a computer, the computer is enabled to implement the method performed by the first access point, the second access point, or the second station in the foregoing method embodiments.

An embodiment of this application further provides a communication system. The communication system includes a first access point, a second access point, and/or a second station. The first access point is configured to perform steps of the method performed by the first access point in the foregoing method embodiments, the second access point is configured to perform steps of the method performed by the second access point in the foregoing method embodiments, and the second station is configured to perform steps of the method performed by the second station in the foregoing method embodiments.

It can be clearly understood by a person skilled in the art that, for convenient and brief description, for explanations and beneficial effects of related content in any one of the communication apparatuses provided above, refer to the corresponding method embodiments provided above. Details are not described herein again.

A specific structure of an execution body of the method provided in embodiments of this application is not particularly limited in embodiments of this application, provided that a program that records code of the method provided in embodiments of this application can be run to perform communication according to the method provided in embodiments of this application. For example, the method provided in this embodiment of this application may be performed by a first access point, a second access point, or a second station, or may be performed by a functional module that is in the first access point, the second access point, or the second station and that can invoke and execute a program.

Various aspects or features of this application may be implemented as methods, apparatuses, or products using standard programming and/or engineering techniques. As used herein, the term "artificial article" may encompass a computer program accessible from any computer-readable device, carrier, or medium.

The computer-readable storage medium may be any usable medium accessible by the computer, or a data storage device, for example, a server or a data center, integrating one or more usable media. The usable medium (or the computer-readable medium) may include, for example, but is not limited to, various media that can store program code such as a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, and a flash memory device (for example, an erasable programmable read-only memory (erasable programmable read-only memory, EPROM), a card, a stick, or a key drive), or a semiconductor medium (for example, a solid-state disk (solid-state disk, SSD), a USB flash drive, a read-only memory (read-only memory, ROM), or a random access memory (random access memory, RAM)).

The various storage media described herein may represent one or more devices and/or other machine-readable media for storing information. The term "machine-readable medium" may include, but is not limited to: radio channels and various other media capable of storing, containing, and/or carrying instructions and/or data.

It should be understood that the memory mentioned in embodiments of this application may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM may include a plurality of forms, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

In the several embodiments provided in this application, it should be understood that the disclosed apparatus and method may be implemented in other manners. For example, the foregoing apparatus embodiments are only examples. For example, division into the foregoing units is only logical function division, and may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof.

When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. For the computer-readable storage medium, refer to the foregoing descriptions.

It should be understood that, in embodiments of this application, numbers "first", "second", ... are merely used to distinguish between different objects, for example, to distinguish between different network devices, and constitute no limitation on the scope of embodiments of this application. Embodiments of this application are not limited thereto.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, performed by a first access point or a communication apparatus disposed in the first access point, wherein the first access point belongs to a first basic service set BSS, and the method comprises:
receiving first information from a second access point, wherein the first information indicates a first maximum time length in which a first station sends a physical layer protocol data unit PPDU, the second access point and the first station belong to a second BSS, a coverage area of the second BSS has an overlapping part with a coverage area of the first BSS, and the first station supports preemption;
generating second information, wherein the second information indicates a second maximum time length in which a second station sends a PPDU, the second maximum time length is less than or equal to the first maximum time length, the second station belongs to the first BSS, and the second station supports preemption; and
sending the second information.

2. The method according to claim 1, wherein the method further comprises:
determining that a basic network allocation vector of the first access point is set based on a frame sent by the second access point or the first station; and
ignoring the basic network allocation vector.

3. The method according to claim 1 or 2, wherein the method further comprises:
receiving third information from the second access point, wherein the third information indicates a third maximum time length in which the first station is allowed to continuously use a channel after obtaining the channel through contention;
generating fourth information, wherein the fourth information indicates a fourth maximum time length in which the second station is allowed to continuously use a channel after obtaining the channel through contention, and the fourth maximum time length is less than or equal to the third maximum time length; and
sending the fourth information.

4. The method according to any one of claims 1 to 3, wherein the method further comprises:
receiving fifth information from the second access point, wherein the fifth information indicates a group in which the second BSS is located; and
determining, based on the fifth information, that the second BSS and the first BSS are in a same group.

5. The method according to claim 4, wherein the fifth information is carried by a field in a beacon frame sent by the second access point or a physical layer signal SIG field of a first PPDU, and the first PPDU is a PPDU sent by the second access point.

6. The method according to any one of claims 1 to 3, wherein the method further comprises:
sending sixth information, wherein the sixth information indicates a BSS that is located in a same group as the first BSS.

7. The method according to claim 6, wherein the sixth information indicates a color or a partial identity document ID of the BSS that is in the same group as the first BSS.

8. The method according to claim 6 or 7, wherein a length of the sixth information is 64 bits.

9. A communication method, performed by a first access point or a communication apparatus disposed in the first access point, wherein the first access point belongs to a first basic service set BSS, and the method comprises:
receiving third information from the second access point, wherein the third information indicates a third maximum time length in which a first station is allowed to continuously use a channel after obtaining the channel through contention, the second access point and the first station belong to a second BSS, a coverage area of the second BSS has an overlapping part with a coverage area of the first BSS, and the first station supports preemption;
generating fourth information, wherein the fourth information indicates a fourth maximum time length in which a second station is allowed to continuously use a channel after obtaining the channel through contention, the fourth maximum time length is less than or equal to the third maximum time length, the second station belongs to the first BSS, and the second station supports preemption; and
sending the fourth information.

10. A communication method, performed by a second access point or a communication apparatus disposed in the second access point, wherein the second access point belongs to a second BSS, and the method comprises:
sending first information to a first access point, wherein the first access point belongs to a first BSS, the first information indicates a first maximum time length in which a first station sends a physical layer protocol data unit PPDU, the second access point and the first station belong to the second BSS, a coverage area of the second BSS has an overlapping part with a coverage area of the first BSS, and the first station supports preemption; and
receiving second information from the first access point, wherein the second information indicates a second maximum time length in which a second station sends a PPDU, the second maximum time length is less than or equal to the first maximum time length, the second station belongs to the first BSS, and the second station supports preemption.

11. The method according to claim 10, wherein the method further comprises:
sending third information to the first access point, wherein the third information indicates a third maximum time length in which the first station is allowed to continuously use a channel after obtaining the channel through contention; and
receiving fourth information from the first access point, wherein the fourth information indicates a fourth maximum time length in which the second station is allowed to continuously use a channel after obtaining the channel through contention, and the fourth maximum time length is less than or equal to the third maximum time length.

12. The method according to claim 10 or 11, wherein the method further comprises:
sending fifth information, wherein the fifth information indicates a group in which the second BSS is located.

13. The method according to claim 12, wherein the fifth information is carried by a field in a beacon frame sent by the second access point or a physical layer SIG field of a first PPDU, and the first PPDU is a PPDU sent by the second access point.

14. The method according to claim 10 or 11, wherein the method further comprises:
receiving sixth information from the first access point, wherein the sixth information indicates a BSS located in a same group as the first BSS.

15. The method according to claim 14, wherein the sixth information indicates a color or a partial ID of the BSS that is in the same group as the first BSS.

16. The method according to claim 14 or 15, wherein a length of the sixth information is 64 bits.

17. A communication method, performed by a second station or a communication apparatus disposed in the second station, wherein the second station belongs to a first BSS, and the method comprises:
receiving fifth information from a second access point, wherein the fifth information indicates a group in which a second BSS is located, a coverage area of the second BSS has an overlapping part with a coverage area of the first BSS, and the second access point belongs to the second BSS; and
determining, based on the fifth information, that the second BSS and the first BSS are in a same group.

18. The method according to claim 17, wherein the fifth information is carried by a field in a beacon frame sent by the second access point or a physical layer SIG field of a first PPDU, and the first PPDU is a PPDU sent by the second access point.

19. The method according to claim 17 or 18, wherein the method further comprises:
receiving seventh information, wherein the seventh information indicates whether the second access point supports preemption; and
determining, based on the seventh information, that the second access point supports preemption.

20. The method according to claim 19, wherein the seventh information is carried by a field in a beacon frame sent by a first access point or the second access point, and the first access point belongs to the first BSS.

21. The method according to any one of claims 17 to 20, wherein the method further comprises:
determining that a basic network allocation vector of the second station is set based on a frame sent by the second access point or a first station, wherein the first station belongs to the second BSS, and the first station supports preemption; and
ignoring the basic network allocation vector.

22. A communication apparatus, wherein the apparatus comprises a processor, the processor is coupled to a memory, and the memory stores instructions; and when the instructions are run by the processor, the processor is enabled to perform the method according to any one of claims 1 to 9.

23. A communication apparatus, wherein the apparatus comprises a processor, the processor is coupled to a memory, and the memory stores instructions; and when the instructions are run by the processor, the processor is enabled to perform the method according to any one of claims 10 to 16.

24. A communication apparatus, wherein the apparatus comprises a processor, the processor is coupled to a memory, and the memory stores instructions; and when the instructions are run by the processor, the processor is enabled to perform the method according to any one of claims 17 to 21.

25. A communication system, comprising a first access point, a second access point, and/or a second station, wherein the first access point is configured to perform the method according to any one of claims 1 to 9, the second access point is configured to perform the method according to any one of claims 10 to 16, and the second station is configured to perform the method according to any one of claims 17 to 21.

26. A computer-readable storage medium, storing a computer program or instructions, wherein the computer program or the instructions are used to implement the method according to any one of claims 1 to 21.

27. A chip, comprising a processor and an interface, configured to invoke, from a memory, a computer program stored in the memory, and run the computer program, to perform the method according to any one of claims 1 to 21.
